# FASCICULE DE BREVET EUROPEEN

(11) **EP 4 477 049 B1**
(45) Date de publication et mention de la délivrance du brevet: **31.12.2025**
(21) Numéro de dépôt: 24181864.0
(22) Date de dépôt: 13.06.2024
(51) Int. Cl.: A01D 87/12

(54) **TABLE DE PREPARATION D'UNE BALLE AGRICOLE**
TISCH ZUR VORBEREITUNG EINES LANDWIRTSCHAFTLICHEN BALLENS
TABLE FOR PREPARING AN AGRICULTURAL BALL

(30) Priorité: 16.06.2023 FR 2306200
(43) Date de publication de la demande: 18.12.2024
(73) Titulaire: N.V. Depoortere, 8791 Beveren-Leie (BE)
(72) Inventeur: DEPOORTERE, Rik, 8908 VLAMERTINGE (BE)
(74) Mandataire: Cabinet Beau de Loménie

(56) Documents cités:
- EP-A1- 2 149 293
- EP-A1- 3 662 740
- EP-A1- 3 692 781
- FR-A1- 3 125 544

## Description

### Domaine Technique

La présente invention concerne le domaine du traitement de tiges végétales, telles le lin ou le chanvre. L'invention concerne plus spécifiquement le domaine de la préparation d'une balle agricole qui est obtenue, au champ, par enroulement en spirale d'une nappe continue de tiges végétales, et qui est destinée à être déroulée pour permettre le traitement de la nappe de tiges végétales, notamment son teillage.

### Technique antérieure

Il est connu d'utiliser, de stocker et de transporter des tiges végétales sous forme de balles agricoles. De telles balles permettent une manipulation facilitée des tiges végétales, notamment d'une nappe continue de tiges végétales, tout en permettant leur déroulage une fois sur le site de destination.

Lorsque les tiges végétales sont sous forme de nappe continue, la balle agricole est alors formée par enroulement de la nappe continue sur elle-même, sous la forme d'une spirale.

Par ailleurs, lors de l'enroulement de la nappe continue sur elle-même, une ou plusieurs ficelles peuvent être insérées entre les différentes couches superposées de la spirale ainsi formée, afin de faciliter notamment le déroulage de la balle. Ainsi, au cours du déroulage de la balle agricole, mise en œuvre par exemple par une dérouleuse dédiée, la balle agricole est mise en rotation dans le sens inverse du sens d'enroulement, et l'extrémité libre de la nappe continue formant l'extrémité distale de la spirale, est entraînée de manière à être éloignée de la balle agricole. Les ficelles insérées entre les différentes couches de la spirale peuvent alors être utilisées pour faciliter la séparation desdites différentes couches entre elles, lors du déroulage. A l'issue du déroulage de la balle agricole, on retrouve donc les tiges végétales sous la forme d'une nappe continue prête à être traitée, et en particulier prête à être teillée.

Toutefois, afin de permettre un déroulage correct de la balle agricole, il est nécessaire de la préparer préalablement à son déroulage. Une telle préparation préliminaire consiste, par exemple, à positionner dans le bon sens la balle agricole, à défaire les éventuelles cordes entourant la balle agricole finie, à initier la séparation de l'extrémité libre de la nappe continue et à isoler les ficelles insérées entre les différentes couches de la spirale.

Il est ainsi connu d'utiliser une table de préparation disposée en amont d'une dérouleuse, afin de permettre à un opérateur de préparer la balle agricole. Une telle table est notamment décrite dans le document FR 3 125 544.

Dans le document FR 3 125 544, la table de préparation comporte classiquement un moyen de mise en mouvement de la balle agricole sur elle-même, par exemple un tapis mobile, associé à un élément de butée, par exemple un rouleau. Le tapis mobile et le rouleau permettent, ensemble, d'entraîner en rotation la balle agricole en vue de sa préparation. Lorsque la préparation de la balle est finie, le rouleau formant butée est alors escamoté à une hauteur sensiblement égale à celle du tapis mobile, afin de faire la continuité entre le tapis mobile et la dérouleuse montée en aval de la table de préparation.

Dans le document FR 3 125 544 mentionné ci-dessus, le moyen de mise en mouvement est par ailleurs monté rotatif autour d'un axe vertical, de manière à permettre un positionnement de la surface périphérique circulaire de la balle agricole face à l'opérateur.

Toutefois, les balles agricoles comportent souvent beaucoup de terre et de poussières qui se libèrent en partie lors de la préparation de la balle. Ainsi, il est fréquent que la terre et les poussières libérées lors de la préparation, viennent tomber dans le mécanisme de la table de préparation, ou en-dessous de la table de préparation, ce qui peut endommager le fonctionnement de la table de préparation, ou bien compliquer les opérations de nettoyage nécessaires au respect de la qualité de l'air dans la zone de la table de préparation.

Par ailleurs, l'opérateur travaillant sur la balle agricole à préparer, est également exposé aux poussières libérées par la balle agricole, notamment en raison de la hauteur relative de la balle agricole par rapport à l'opérateur.

### Exposé de l'invention

La présente invention vise à résoudre les différents problèmes techniques énoncés précédemment. En particulier, la présente invention vise à proposer une table de préparation permettant de limiter l'exposition aux poussières, pour les personnes travaillant dans le domaine du traitement de tiges végétales, notamment sous forme de nappe continue, conditionnées sous forme de balles agricoles. Plus précisément, la présente invention vise à proposer une table de préparation permettant de faciliter la récupération des poussières et corps étrangers susceptibles de se libérer lors de la préparation de la balle agricole, tout en facilitant le travail de l'opérateur travaillant sur ladite balle agricole à préparer.

Ainsi, selon un aspect, il est proposé une table de préparation d'une balle agricole, par exemple d'une balle de paille, de lin ou de chanvre, obtenue par enroulement en spirale d'une nappe continue de tiges végétales préalablement prélevée sur le sol. La table de préparation comporte :
- une entrée pour recevoir une balle agricole à préparer, et une sortie pour fournir la balle agricole préparée,
- un châssis, de préférence statique,
- un support, par exemple un tapis porteur, comportant une surface destinée à recevoir la balle agricole pendant sa préparation, l'axe de la spirale étant orienté sensiblement horizontalement,
- des moyens de mise en rotation de la balle agricole positionnée sur le support, autour d'une direction sensiblement parallèle à l'axe de la spirale, les moyens de mise en rotation comprenant des moyens de déplacement de la surface du support selon une direction déterminée sensiblement horizontale, par exemple perpendiculaire à l'axe de la spirale, et des moyens de retenue, par exemple au moins un rouleau et de préférence deux rouleaux, montés en rotation autour d'un axe sensiblement horizontal et préférentiellement transversal à ladite direction déterminée, et
- des moyens de pivotement du support par rapport au châssis, autour d'un axe sensiblement vertical.

La table de préparation comprend également des moyens de déplacement du support configurés pour déplacer le support, et éventuellement la balle agricole positionnée, et notamment préparée, sur la surface du support, entre l'entrée et la sortie de la table de préparation, et dans laquelle l'axe des moyens de retenue est positionné au-dessus de l'axe de la spirale.

Ainsi, la table de préparation selon l'invention comprend des moyens de retenue rotatifs qui sont montés au-dessus de l'axe de la spirale : les moyens de retenue, par exemple un ou plusieurs rouleaux, sont donc positionnés au niveau de la partie supérieure de la balle agricole, et non inférieure comme dans la table décrite dans le document FR 3 125 544. Un tel positionnement des moyens de retenue permet ainsi de limiter le nombre d'éléments présents sous la balle agricole et susceptibles d'être endommagés ou de retenir les poussières libérées par ladite balle agricole. Il devient donc plus facile de nettoyer et de récupérer les poussières en partie basse de la table de préparation selon l'invention.

Par ailleurs, la table de préparation présente également un encombrement plus faible autour de la balle agricole positionnée sur le support, ce qui permet une plus grande liberté de déplacement pour l'opérateur devant la préparer, et/ou une plus grande liberté de déplacement du support, afin de limiter l'exposition de l'opérateur aux poussières libérées lors de la préparation.

En particulier, la table de préparation est configurée pour déplacer le support entre l'entrée et la sortie, de manière à compenser l'absence de rouleaux de transition en partie basse de la table de préparation, ou d'autres moyens de transfert entre le support et le reste de l'installation de traitement des tiges végétales. La table de préparation selon la présente invention permet donc de libérer l'espace autour du support, afin d'en faciliter le nettoyage et de faciliter le déplacement de la balle agricole, notamment par rapport à l'opérateur devant la préparer.

La direction déterminée peut notamment être la direction s'étendant entre l'entrée et la sortie de la table de préparation.

Préférentiellement, les moyens de retenue sont montés sur le châssis, ou le support.

Les moyens de retenue peuvent être montés sur le châssis de la table de préparation, si celui-ci s'étend au-dessus de la balle agricole, et être commandés indépendamment du support. Alternativement, les moyens de retenue peuvent être montés sur le support, au-dessus et à distance de celui-ci, de manière à se déplacer et pivoter solidairement avec lui.

Préférentiellement, les moyens de retenue sont escamotables, et comportent : une configuration déployée dans laquelle l'axe des moyens de retenue est positionné entre l'axe de la spirale et une extrémité supérieure de la balle agricole, et une configuration rétractée dans laquelle l'axe des moyens de retenue est positionné au-dessus d'une extrémité supérieure de la balle agricole de manière à permettre le déplacement de la balle agricole en-dessous desdits moyens de retenue.

Afin de permettre le positionnement, ou le retrait, de la balle agricole sur le support, les moyens de retenue peuvent présenter une position escamotée dans laquelle ils sont relevés afin de permettre le passage de la balle agricole sur le support ou la sortie de la balle agricole du support. A l'inverse, en position déployée, les moyens de retenue remplissent leur fonction de butée pour la balle agricole, de manière à la maintenir sur le support lors de sa mise en rotation.

Préférentiellement, les moyens de retenue comprennent, dans le sens de déplacement de la balle agricole depuis l'entrée jusqu'à la sortie de la table de préparation, un rouleau positionné devant la balle agricole lorsque celle-ci est positionnée sur le support, et un rouleau positionné derrière la balle agricole lorsque celle-ci est positionnée sur le support.

Les moyens de retenue peuvent comprendre deux rouleaux : un positionné devant la balle agricole devant être préparée, et un positionné derrière. Il est alors possible de faire tourner la balle agricole sur elle-même, dans les deux sens de rotation, selon les besoins de l'opérateur. Par ailleurs, en cas de moyens de retenue solidaires du support, la rotation, ou non, de 180° du support autour d'un axe vertical, aboutira toujours à une configuration présentant un moyen de retenue devant et un moyen de retenue derrière la balle agricole, afin de pouvoir faire tourner la balle agricole sur elle-même, dans l'un quelconque des sens de rotation voulu par l'opérateur.

Préférentiellement, les moyens de déplacement du support sont également configurés pour déplacer le support selon une direction verticale.

En plus du déplacement horizontal du support entre l'entrée et la sortie de la table de préparation, les moyens de déplacement peuvent également être configurés pour déplacer le support verticalement. Il devient alors possible de positionner le support de manière adéquate par rapport à l'opérateur, notamment afin de réduire l'exposition de ce dernier aux poussières. Ainsi, le support peut être descendu verticalement par rapport à l'opérateur, de manière à ce que la tête de celui-ci se retrouve à hauteur de la portion supérieure de la balle agricole pendant sa préparation, et soit moins exposée aux poussières tombant de la balle agricole. L'absence de moyens de retenue au même niveau que le support permet également de réduire l'épaisseur du dispositif au niveau du support, et donc de permettre un abaissement vertical plus prononcé par rapport à l'opérateur lors de la préparation.

En particulier, des moyens de déplacement configurés pour déplacer verticalement le support, permettent de s'affranchir, au niveau de la table de préparation, des contraintes de hauteur imposées par le reste de l'installation. Plus précisément, la balle agricole, via le support, peut être positionnée, pendant la préparation, librement à une hauteur voulue, indépendamment de la hauteur des dispositifs montés en amont et en aval de la table de préparation.

Alternativement, il est également possible d'envisager des moyens de retenue montés fixes sur le châssis, c'est-à-dire sans une position déployée et une position escamotée : dans ce cas, c'est le déplacement vertical du support, avec la balle agricole positionnée dessus, qui permet de venir positionner la balle agricole au niveau des moyens de retenue en vue de la préparation, et de venir désengager la balle agricole préparée des moyens de retenue au moment du transfert vers la dérouleuse. Dans ce cas, les hauteurs et/ou les géométries respectives de la table de réserve, de la table de préparation et de la dérouleuse peuvent être adaptées en conséquence pour permettre le déplacement de la balle agricole entre elles.

Préférentiellement, la table de préparation comprend également des moyens de suspension configurés pour suspendre le support sur le châssis.

Le support peut être monté suspendu sur le châssis de la table de préparation. En particulier, les moyens de retenue étant montés en partie haute de la table de préparation, et le support pouvant être monté mobile verticalement, il est avantageux de le suspendre sur le châssis, c'est-à-dire sur la partie haute de la table de préparation où sont déjà montés les moyens de retenue, afin d'en permettre le déplacement horizontal et éventuellement vertical par rapport au châssis. Par ailleurs, un support suspendu sur le châssis permet également de réduire les éléments présents en partie basse de la table de préparation, et donc d'en faciliter le nettoyage ou de réduire la distance entre le sol et la surface du support.

Préférentiellement, les moyens de suspension sont montés sur le châssis par les moyens de pivotement, et éventuellement les moyens de déplacement, de préférence situés au-dessus d'une extrémité supérieure de la balle agricole, et les moyens de pivotement, et éventuellement les moyens de déplacement, sont configurés pour faire tourner autour d'un axe sensiblement vertical, et éventuellement translater selon ledit axe sensiblement vertical, le support et les moyens de suspension par rapport au châssis.

Afin de permettre une rotation, et éventuellement un déplacement vertical, du support par rapport au châssis, les moyens de suspension peuvent être montés sur le châssis via des moyens de pivotement. La liaison pivot entre le support et le châssis est alors positionnée entre les moyens de suspension et le châssis, et peut éventuellement intégrer une liaison coulissante verticalement. Une telle configuration permet notamment de garder les moyens de suspension de part et d'autre de la balle agricole, quel que soit l'angle de rotation du support par rapport au châssis, ce qui donne en permanence, à l'opérateur, accès aux faces avant et arrière de la balle agricole pour la préparer.

Préférentiellement, les moyens de pivotement sont configurés pour faire pivoter le support d'au moins 90° dans un sens ou dans l'autre, voire de 180°, par rapport à la direction verticale.

Le pivotement de 90° de la balle agricole permet d'orienter la face avant ou arrière de celle-ci sur un côté de la table de préparation, de manière à en faciliter l'accès par l'opérateur positionné à côté de l'installation. Par ailleurs, le pivotement à 180° de la balle agricole permet de re-orienter celle-ci dans le bon sens de déroulement, avant son transfert de la table de préparation vers la dérouleuse, lorsque celle-ci n'est pas orientée correctement.

Préférentiellement, les moyens de mise en rotation sont configurés pour faire tourner, lors de la préparation de la balle agricole, la balle agricole dans le sens de déroulement de la spirale, de préférence par déplacement de la surface du support selon la direction allant de l'entrée vers la sortie de la table de préparation après une éventuelle rotation de 180° de la balle agricole par les moyens de pivotement.

La rotation de la balle agricole, dans le sens de déroulement de la spirale, facilite l'identification et la séparation du début de la nappe continue par rapport au reste de la spirale. En particulier, avec des moyens de retenue positionnés en partie basse de la balle agricole, comme décrit dans la demande FR 3 125 544, un tel sens de rotation pourrait conduire à un décollement de la nappe continue entre le support et le rouleau avant, c'est-à-dire avant que le début de la nappe continue ne passe devant l'opérateur. A l'inverse, avec une table de préparation selon la présente invention, l'opérateur a la possibilité de trouver et de détacher le début de la nappe continue, entre le support et le moyen de retenue avant situé en partie haute. De plus, en cas de décollement de la nappe continue au niveau du moyen de retenue avant, celle-ci va alors retomber vers l'opérateur qui aura donc en main le début de la nappe continue.

Préférentiellement, la table de préparation comprend également des moyens d'entraînement configurés pour enrouler, lors de la rotation de la balle agricole, des ficelles de ficelage de la balle agricole et/ou des moyens de détection, par exemple visuels, configurés pour détecter, lors de la rotation de la balle agricole, l'ouverture de la spirale.

Les moyens d'entraînement sont configurés pour récupérer et enrouler les ficelles entourant la balle agricole, lors de sa préparation. Il devient alors plus facile de préparer la balle agricole, voire possible de réaliser certaines étapes de manière automatisée, afin de limiter encore plus l'exposition de l'opérateur aux poussières.

### Brève description des dessins

[Fig. 1] La figure 1 représente, de manière schématique, une table de préparation selon l'invention, vue de côté ;
[Fig. 2] La figure 2 représente, de manière schématique, la table de préparation de la figure 1, dans une première configuration d'accueil d'une balle agricole à préparer ;
[Fig. 3] [Fig. 4] Les figures 3 et 4 représentent, de manière schématique, la table de préparation de la figure 1, dans une deuxième et troisième configurations avec une balle agricole à préparer ;
[Fig. 5] La figure 5 représente, de manière schématique, la table de préparation de la figure 1, dans une quatrième configuration dans laquelle la balle agricole est positionnée pour en permettre la préparation ;
[Fig. 6] La figure 6 représente, de manière schématique, la table de préparation de la figure 1, dans une cinquième configuration dans laquelle la balle agricole a été préparée ; et
[Fig. 7] [Fig. 8] Les figures 7 et 8 représentent, de manière schématique, la table de préparation de la figure 1, dans une sixième et septième configurations avec la balle agricole préparée.

### Description des modes de réalisation

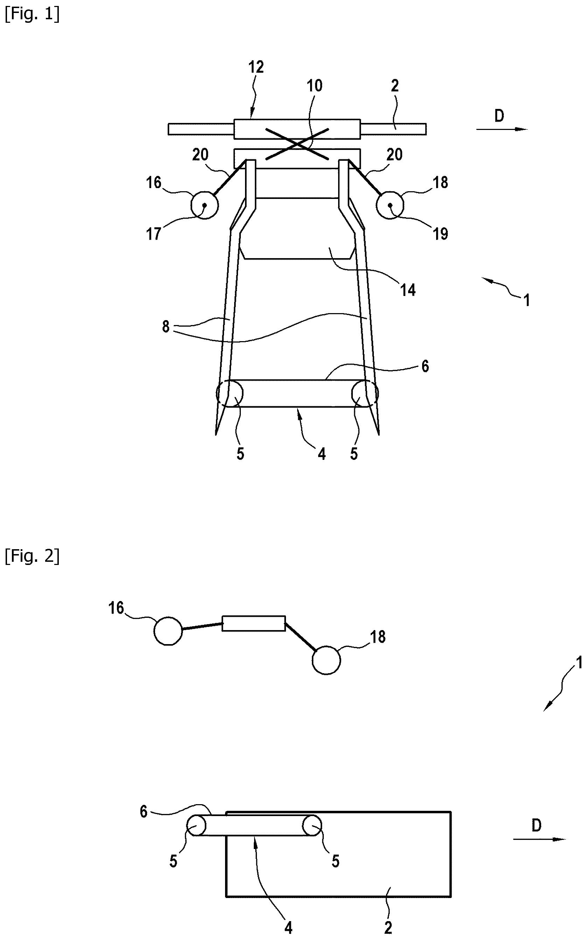

La figure 1 illustre de manière schématique un exemple de table de préparation 1 selon l'invention, vue de côté. Le but de la table de préparation 1 est de permettre à un opérateur de préparer une balle agricole en vue de son déroulage en une nappe continue de tiges végétales. Ainsi, une telle table de préparation est classiquement montée dans une installation de teillage, entre une table de réserve au niveau de laquelle sont stockées les balles agricoles à dérouler, et une dérouleuse au niveau de laquelle les balles agricoles sont déroulées en nappe continue en vue de leur teillage.

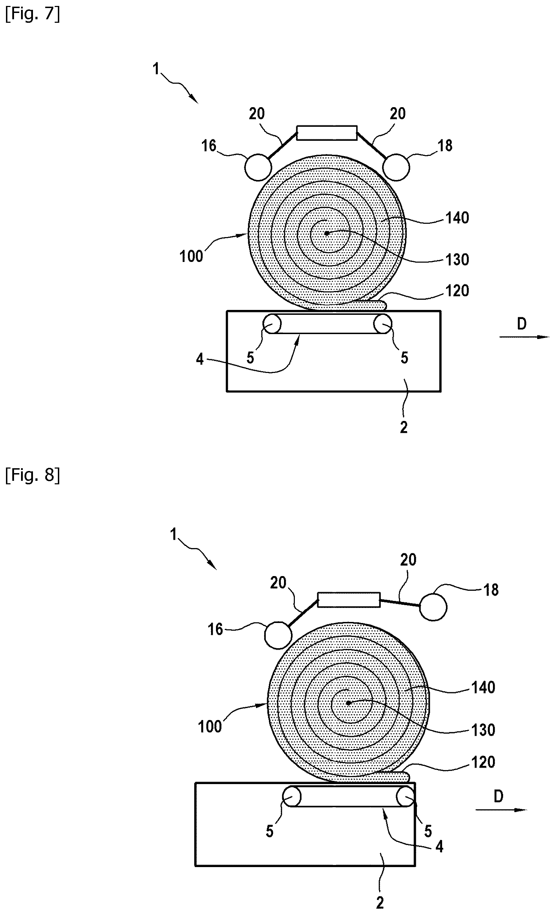

En particulier, la table de préparation 1 selon la présente invention est configurée pour préparer une balle agricole 100 (voir figure 7) obtenue par enroulement d'une nappe continue 120 de tiges végétales, par exemple issue d'un andain. La nappe continue 120 est enroulée sur elle-même autour d'un axe 130, de manière à obtenir une spirale 140 qui est ensuite fermée lorsque celle-ci présente une taille déterminée ou voulue. Afin de faciliter le déroulage de la balle agricole 100, une ou plusieurs ficelles, peuvent être ajoutées à la nappe continue préalablement ou pendant son enroulement. La ou les ficelles sont ainsi positionnées sur une face de la nappe continue enroulée, et délimitent les différentes couches de la spirale 140 formée par la nappe continue 120 enroulée. Une fois la balle agricole 100 formée, une ou plusieurs ficelles périphériques peuvent être enroulées autour d'elle, afin d'empêcher qu'elle ne se déroule toute seule.

La table de préparation 1 a pour but de faire tourner sur elle-même, pivoter et/ou déplacer la balle agricole 100, afin de permettre à un opérateur de la préparer préalablement à son déroulage. La préparation consiste notamment à retirer les ficelles périphériques entourant la balle agricole 100, et à initier la séparation de la nappe continue 120, du reste de la spirale 140. Une telle préparation est classiquement réalisée par un opérateur, au début de l'installation de teillage.

La table de préparation 1 comporte ainsi une entrée, située à gauche sur les figures 1 à 8, par laquelle la balle agricole à préparer est fournie par la table de réserve, et une sortie, située à droite sur les figures 1 à 8, par laquelle la balle agricole préparée est transférée vers la dérouleuse.

La table de préparation 1 comprend un châssis 2, généralement solidaire du sol ou du reste de l'installation de teillage, et un support 4 avec une surface d'accueil 6 sur laquelle la balle agricole 100 est destinée à reposer lors de sa préparation. La balle agricole 100 est notamment placée sur la surface d'accueil 6 de manière à ce que l'axe 130 soit orienté horizontalement, selon une direction perpendiculaire à la direction D s'étendant entre l'entrée et la sortie de la table de préparation. En particulier, afin de faire pivoter et/ou déplacer la balle agricole 100, le support 4 est monté pivotant et coulissant par rapport au châssis 2, comme cela sera décrit ci-dessous. Par ailleurs, afin de faire tourner la balle agricole 100 sur elle-même, la surface d'accueil 6 du support est configurée pour se déplacer, en particulier pour tourner sur elle-même. Ainsi, le support 4 peut comprendre un tapis porteur, monté entre deux rouleaux rotatifs d'extrémités 5, et configuré pour tourner sur lui-même.

Selon le mode de réalisation particulier de l'invention décrit dans la présente description détaillée, le support 4 comporte également des moyens de suspension 8 permettant de suspendre la surface d'accueil 6 au châssis 2, de manière à ce que la liaison entre le support 4 et le châssis soit situé au-dessus de l'axe 130 de la balle agricole 100, et plus généralement au-dessus de la balle agricole 100.

Ainsi, les moyens de suspension 8 sont reliés au châssis 2 par des moyens de pivotement 10 et des moyens de déplacement 12.

Les moyens de pivotement 10 sont configurés pour faire pivoter le support 4 par rapport au châssis 2, autour d'un axe sensiblement vertical. En particulier, de tels moyens de pivotement 10 permettent de faire tourner l'axe 130 de la balle agricole 100 qui est positionné horizontalement.

Les moyens de déplacement 12 sont configurés pour, d'une part, déplacer, notamment horizontalement, le support 4 entre l'entrée et la sortie de la table de préparation 1, c'est-à-dire depuis la table de réserve positionnée en amont de la table de préparation jusqu'à la dérouleuse positionnée en aval de la table de préparation, et, d'autre part, déplacer verticalement le support 4 par rapport au châssis 2. Les moyens de déplacement 12 peuvent donc comprendre d'une part des moyens de translation, par exemple le long d'un rail ou d'un guide solidaire du châssis 2 et orienté entre l'entrée et la sortie de la table 1, pour pouvoir se déplacer entre l'entrée et la sortie de la table 1, et d'autre part des moyens de levage pour lever ou descendre le support 4 par rapport au sol et au châssis 2. Les moyens de déplacement 12 sont donc configurés pour translater la balle agricole 100, et son axe 130, dans un plan vertical s'étendant entre l'entrée et la sortie de la table de préparation 1.

Afin de maintenir la balle agricole 100 sur la surface d'accueil 6 pendant la préparation, des butées latérales 14 sont prévues de part et d'autre du support 4. Les butées 14 évitent notamment un déplacement latéral de la balle agricole 100 sur la surface d'accueil 6 selon l'axe 130 de la balle agricole 100.

Comme indiqué précédemment, la table de préparation 1 est configurée pour mettre en rotation la balle agricole 100 autour de son axe 130, c'est-à-dire pour faire tourner la balle agricole 100 autour de son axe 130. A cet effet, le support 4 comporte des moyens d'entraînement de la surface d'accueil 6 de manière à la faire tourner sur elle-même, et des moyens de retenue pour maintenir la balle agricole sur la surface d'accueil 6.

Les moyens d'entraînement peuvent être par exemple les rouleaux rotatifs d'extrémité 5 motorisés, afin d'entraîner en rotation le tapis porteur et donc la surface d'accueil 6. Les rouleaux étant montés rotatifs autour d'un axe sensiblement horizontal perpendiculaire à la direction D s'étendant entre l'entrée et la sortie de la table de préparation 1, on obtient alors un déplacement de la surface d'accueil selon ladite direction D s'étendant entre l'entrée et la sortie de la table de préparation 1.

Les moyens de retenue peuvent comprendre un ou plusieurs des rouleaux rotatifs : par exemple un premier rouleau 16, ou rouleau amont, disposé du côté de l'entrée de la table de préparation 1, et un deuxième rouleau 18, ou rouleau aval, disposé du côté de la sortie de la table de préparation 1. Les rouleaux 16, 18 sont montés rotatifs autour d'un axe sensiblement horizontal et perpendiculaire à la direction D s'étendant entre l'entrée et la sortie de la table de préparation 1. En utilisation, les rouleaux 16, 18 des moyens de retenue seront montés rotatifs autour d'un axe respectif 17, 19, parallèle à l'axe 130 de la balle agricole 100. Par ailleurs, et afin d'agir sur la balle agricole 100, les rouleaux 16, 18 sont positionnés dans la table de préparation 1 de manière à venir en contact avec la surface périphérique de la balle agricole 100 positionnée sur la surface d'accueil 6, c'est-à-dire sont positionnés de manière à ce que leur axe 17, 19 de rotation soit positionné à une hauteur comprise entre celles de l'extrémité inférieure et de l'extrémité supérieure de la balle agricole 100. Ainsi, lors de la rotation du tapis porteur du support 4, la balle agricole 100 va venir en butée contre l'un des rouleaux 16, 18 et se mettre alors à tourner sur elle-même autour de son axe 130.

Selon l'invention, les moyens de retenue, en particulier les rouleaux 16, 18, sont montés en partie supérieure du châssis 2, de manière à ce que la balle agricole 100 vienne en contact avec les moyens de retenue par sa moitié supérieure. Ainsi, dans le cas présent, les rouleaux 16, 18 sont montés sur le châssis 2 de manière à ce que leur axe 17, 19 de rotation soit positionné au-dessus de l'axe 130 de la balle agricole 100 placée sur la surface d'accueil 6.

Afin de permettre une entrée de la balle agricole 100 à préparer sur la surface d'accueil 6 et une sortie de la balle agricole 100 préparée hors de la surface d'accueil 6, les moyens de retenue peuvent être escamotables, ou bien peuvent être déplacés verticalement par rapport au support 4, de manière à augmenter ou réduire la distance entre l'axe de rotation des moyens de retenue et la surface d'accueil 6.

Dans l'exemple illustré sur les figures 1 à 8, le ou les rouleaux 16, 18 sont montés escamotables sur le support 4, et notamment à l'extrémité supérieure des moyens de suspension 8, de manière à présenter une configuration déployée dans laquelle l'axe 17, 19 de rotation est rapproché de la surface d'accueil 6 de manière à être à une hauteur comprise entre celle de l'axe 130 et celle de l'extrémité supérieure de la balle agricole 100, et une configuration rétractée dans laquelle l'axe 17, 19 de rotation est éloigné de la surface d'accueil 6 de manière à être au-dessus de l'extrémité supérieure de la balle agricole 100. Ainsi, le ou les rouleaux 16, 18 peuvent être montés sur le support 4 par leur axe 17, 19 de rotation, via des bras mobiles 20 configurés pour déplacer ledit axe 17, 19 de rotation dans un plan vertical comportant la direction D s'étendant entre l'entrée et la sortie de la table de préparation 1.

Il va maintenant être décrit les différentes configurations de la table de préparation 1 lors de la préparation d'une balle agricole 100.

Ainsi, dans une première configuration illustrée à la figure 2, la table de préparation 1 est en attente de recevoir la balle agricole 100. La surface d'accueil 6 du support 4 est positionnée du côté de l'entrée de la table de préparation 1, et le rouleau amont 16 est positionné dans sa configuration escamotée de manière à pouvoir laisser passer la balle agricole 100 à préparer en-dessous de lui.

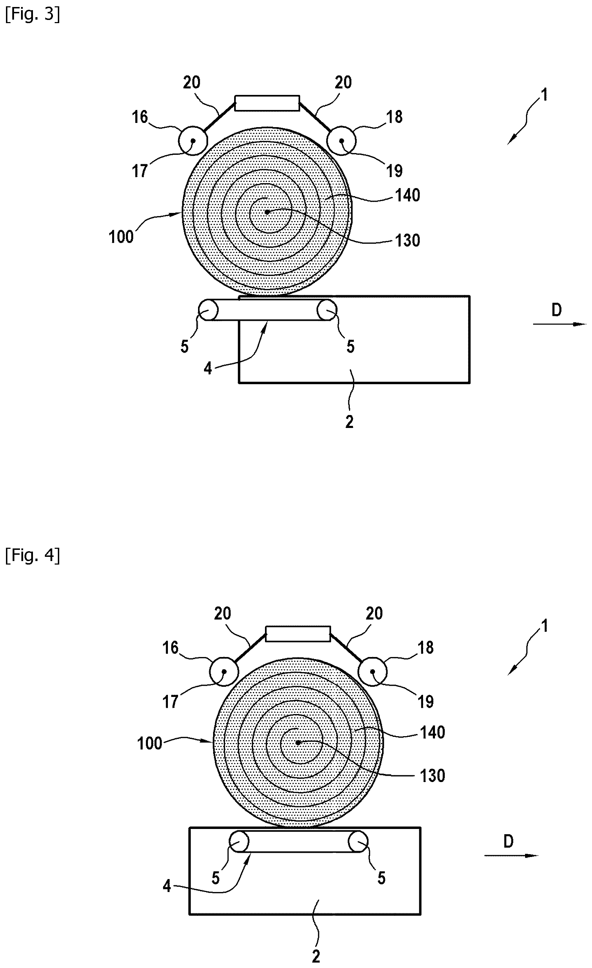

Dans l'étape suivante illustrée à la figure 3, la balle agricole 100 est positionnée sur la surface d'accueil 6, notamment de manière à ce que l'axe 130 de la spirale 140 soit positionné horizontalement et perpendiculairement à la direction D. Par ailleurs, le rouleau amont 16 est positionné dans sa configuration déployée dans laquelle son axe 17 de rotation est positionné à une hauteur située entre celle de l'axe 130 de la spirale et celle de l'extrémité supérieure de la balle agricole 100.

Toutefois, il est également possible de prévoir des rouleaux 16, 18 montés coulissant verticalement par rapport à la surface d'accueil 6, de manière à se soulever lorsque la balle agricole 100 vient sur la surface d'accueil 6, et de manière à redescendre sur la surface supérieure de la balle agricole 100 lorsque celle-ci est placée sur la surface d'accueil 6.

A la figure 4, la balle agricole 100 est positionnée au milieu du châssis 2 par déplacement horizontal du support 4 selon la direction D. Un tel déplacement du support 4 est obtenu grâce aux moyens de déplacement 12 configurés pour translater le support 4 par rapport au châssis 2. Une fois le support 4 positionné à distance de l'entrée et de la sortie de la table de préparation 1, le support 4, avec la balle agricole 100 dessus, peut être pivoté autour d'un axe vertical, par rapport au châssis 2.

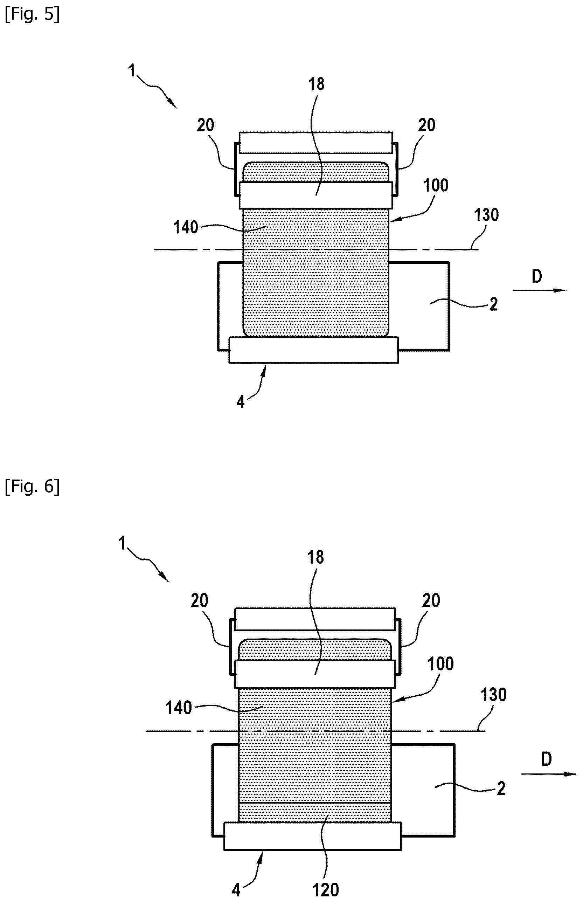

La figure 5 illustre la configuration de la table de préparation 1 après une rotation du support 4 de 90° autour d'un axe vertical et d'un déplacement vertical du support 4 vers le bas. Une telle configuration est notamment particulièrement confortable pour un opérateur ayant à préparer la balle agricole 100 puisque la face de la balle agricole à préparer est désormais exposée latéralement et fait donc face à l'opérateur se situant à côté de l'installation de teillage. Par ailleurs, la balle agricole 100 étant descendue, l'opérateur se retrouve alors plus en hauteur, et est ainsi moins exposé aux chutes de poussières libérées par la balle agricole lors de sa préparation.

La balle agricole 100 peut alors être mise en rotation sur elle-même, pour en faire la préparation : la surface d'accueil 6 du support 4 peut être mise en rotation (par les rouleaux motorisés 5 notamment), tandis que les rouleaux 16, 18 permettent de maintenir la balle agricole 100 en place. La balle agricole 100 est donc mise en rotation, ce qui permet à l'opérateur de venir prendre et enlever les ficelles entourant la balle.

Par ailleurs, pour préparer la balle agricole 100, l'opérateur peut la faire tourner indifféremment dans un sens ou dans l'autre, c'est-à-dire avec la face exposée descendant ou montant. En particulier, le fait de faire tourner la balle agricole de manière à ce que sa face exposée à l'opérateur monte (sens de déroulage), ne pose pas de difficulté avec le rouleau 18 de retenue puisque celui-ci se trouve en hauteur : l'opérateur a donc toute la distance entre la surface d'accueil 6 et le rouleau 18 pour trouver le début de la nappe continue et le séparer du reste de la spirale. Il peut suffire par exemple à l'opérateur de prendre les extrémités des ficelles et d'attendre, lors de la rotation de la balle agricole dans le sens de déroulage, d'atteindre le début de la nappe continue, ce qui n'est pas possible lorsque la balle est mise en rotation dans le sens inverse.

La balle agricole préparée 100 est représentée en figure 6, avec le début de la nappe continue 120 séparée du reste de la spirale 140 et retombant sur la surface d'accueil 6. La balle agricole 100 préparée peut alors être pivotée de -90° par rapport à la verticale, de manière à retrouver son orientation initiale, et être remontée par rapport au sol, par déplacement vertical, pour obtenir la configuration illustrée à la figure 7.

Dans une dernière configuration illustrée à la figure 8, le support 4 est déplacé horizontalement vers la sortie de la table de préparation 1 et le rouleau aval 18 est positionné en configuration escamotée, en vue du transfert de la balle agricole préparée vers une dérouleuse.

En particulier, on note que la spirale de la balle agricole préparée est orientée dans le bon sens afin de permettre, lors d'une rotation dans le sens inverse des aiguilles d'une montre, un déroulement de la spirale en une nappe continue 120.

Toutefois, il convient de noter que, lorsque la balle agricole 100 est mal orientée à son entrée dans la table de préparation 1, il est alors possible, lors de la préparation, de la faire tourner d'abord de -90° pour exposer la face arrière de la balle agricole. Dans ce cas, le rouleau de retenue visible sur les figures 5 et 6 est le rouleau amont 16. Puis, lorsque la balle agricole est préparée, il faut à nouveau la faire tourner de -90° (soit une rotation totale de -180°), pour obtenir en sortie de la table de préparation 1, la balle agricole préparée et orientée correctement pour en permettre le déroulement par rotation dans le sens inverse des aiguilles d'une montre.

Il convient de noter que la table de préparation 1 pourrait également comporter des moyens d'entraînement (non-représentés) configurés pour enrouler, au moins partiellement, la ou les différentes ficelles de la balle agricole lors de sa préparation et en vue de son déroulage, ainsi que des moyens de détection (non représentés) de l'ouverture de la spirale, par exemple visuels, afin de rendre une telle préparation de la balle agricole, automatique.

Par ailleurs, et même s'ils ne sont pas représentés, la table de préparation 1 peut également comporter, de manière classique, des moyens d'aspiration, notamment en continu, des poussières présentes et libérées par la balle agricole.

On constate notamment que, dans la table de préparation 1 selon la présente invention, les moyens de déplacement 12, de pivotement 10 et de retenue 16, 18 sont tous montés en position haute, c'est-à-dire au-dessus de l'axe 130 de la spirale 140, voire au-dessus de l'extrémité supérieure de la balle agricole 100. Seul le tapis porteur, avec les rouleaux motorisés 5, et éventuellement le châssis 2, sont sous la balle agricole 100. Un tel agencement simplifie grandement la partie basse de la table de préparation 1, et en facilite le nettoyage, notamment en ce qui concerne les poussières libérées par la balle agricole, sans limiter le travail de préparation effectué par l'opérateur ni les possibilités de repositionnement de la balle agricole. En particulier, avec une table de préparation ayant un support 4 suspendu, il est alors possible de n'avoir plus aucun système en dessous dudit support 4.

Ainsi, grâce à la table de préparation selon la présente invention, il devient plus facile de nettoyer et d'enlever les poussières libérées par les balles agricoles préparées, tout en facilitant le travail de l'opérateur qui peut déplacer, pivoter et faire librement tourner sur elle-même, dans un sens ou dans l'autre, la balle agricole à préparer.

## Revendications

1. Table de préparation (1) d'une balle agricole (100), par exemple d'une balle de paille, de lin ou de chanvre, obtenue par enroulement en spirale (140) d'une nappe continue (120) de tiges végétales préalablement prélevée sur le sol, la table de préparation (1) comportant :
- une entrée pour recevoir une balle agricole (100) à préparer, et une sortie pour fournir la balle agricole (100) préparée,
- un châssis (2), de préférence statique,
- un support (4), par exemple un tapis porteur, comportant une surface (6) destinée à recevoir la balle agricole (100) pendant sa préparation, l'axe (130) de la spirale (140) étant orienté sensiblement horizontalement,
- des moyens de mise en rotation de la balle agricole (100) positionnée sur le support, autour d'une direction sensiblement parallèle à l'axe (130) de la spirale (140), les moyens de mise en rotation comprenant des moyens de déplacement (5) de la surface (6) du support (4) selon une direction déterminée (D) sensiblement horizontale, et des moyens de retenue (16, 18), par exemple au moins un rouleau et de préférence deux rouleaux, montés en rotation autour d'un axe (17, 19) sensiblement horizontal et préférentiellement transversal à ladite direction déterminée (D), et
- des moyens de pivotement (10) du support (4) par rapport au châssis (2), autour d'un axe sensiblement vertical,
**caractérisée en ce que** la table de préparation (1) comprend également des moyens de déplacement (12) du support (4) configurés pour déplacer le support (4), et éventuellement la balle agricole (100) positionnée sur la surface (6) du support, entre l'entrée et la sortie de la table de préparation, et **en ce que** l'axe (17, 19) des moyens de retenue (16, 18) est positionné au-dessus de l'axe (130) de la spirale (140).

2. Table de préparation (1) selon la revendication 1, dans laquelle les moyens de retenue (16, 18) sont montés sur le châssis (2), ou le support (4).

3. Table de préparation (1) selon la revendication 1 ou 2, dans laquelle les moyens de retenue (16, 18) sont escamotables, et comportent : une configuration déployée dans laquelle l'axe (17, 19) des moyens de retenue est positionné entre l'axe (130) de la spirale et une extrémité supérieure de la balle agricole (100), et une configuration rétractée dans laquelle l'axe (17, 19) des moyens de retenue est positionné au-dessus d'une extrémité supérieure de la balle agricole (100) de manière à permettre le déplacement de la balle agricole (100) en-dessous desdits moyens de retenue (16, 18).

4. Table de préparation (1) selon l'une quelconque des revendications précédentes, dans laquelle les moyens de retenue (16, 18) comprennent, dans le sens de déplacement (D) de la balle agricole depuis l'entrée jusqu'à la sortie de la table de préparation, un rouleau (18) positionné devant la balle agricole (100) lorsque celle-ci est positionnée sur le support (4), et un rouleau (16) positionné derrière la balle agricole (100) lorsque celle-ci est positionnée sur le support (4).

5. Table de préparation (1) selon l'une quelconque des revendications précédentes, dans laquelle les moyens de déplacement (12) du support sont également configurés pour déplacer le support (4) selon une direction verticale.

6. Table de préparation (1) selon l'une quelconque des revendications précédentes, comprenant également des moyens de suspension (8) configurés pour suspendre le support (4) sur le châssis (2).

7. Table de préparation (1) selon la revendication précédente, dans laquelle les moyens de suspension (8) sont montés sur le châssis (2) par les moyens de pivotement (10), et éventuellement les moyens de déplacement (12), de préférence situés au-dessus d'une extrémité supérieure de la balle agricole (100), et dans laquelle les moyens de pivotement (10), et éventuellement les moyens de déplacement (12), sont configurés pour faire tourner autour d'un axe sensiblement vertical, et éventuellement translater selon ledit axe sensiblement vertical, le support (4) et les moyens de suspension (8) par rapport au châssis (2).

8. Table de préparation (1) selon l'une quelconque des revendications précédentes, dans laquelle les moyens de pivotement (10) sont configurés pour faire pivoter le support (4) d'au moins 90° dans un sens ou dans l'autre, voire de 180°, par rapport à la direction verticale.

9. Table de préparation (1) selon l'une quelconque des revendications précédentes, dans laquelle les moyens de mise en rotation sont configurés pour faire tourner, lors de la préparation de la balle agricole (100), la balle agricole (100) dans le sens de déroulement de la spirale (140), de préférence par déplacement de la surface (6) du support selon la direction (D) allant de l'entrée vers la sortie de la table de préparation après une éventuelle rotation de 180° de la balle agricole (100) par les moyens de pivotement (10).

10. Table de préparation (1) selon la revendication précédente, comprenant également des moyens d'entraînement configurés pour enrouler, lors de la rotation de la balle agricole, des ficelles de ficelage de la balle agricole (100)et/ou des moyens de détection, par exemple visuels, configurés pour détecter, lors de la rotation de la balle agricole, l'ouverture de la spirale.

## Patentansprüche

1. Vorbereitungstisch (1) eines landwirtschaftlichen Ballens (100), zum Beispiel eines Stroh-, Flachs- oder Hanfballens, der durch spiralförmiges Aufwickeln (140) einer kontinuierlichen Bahn (120) von Pflanzenstängeln erlangt wird, die zuvor von dem Boden aufgenommen wurden, der Vorbereitungstisch (1) umfassend:
- einen Eingang zum Aufnehmen eines vorzubereitenden landwirtschaftlichen Ballens (100) und einen Ausgang zum Bereitstellen des vorbereiteten landwirtschaftlichen Ballens (100),
- ein vorzugsweise statisches Gestell (2),
- einen Träger (4), zum Beispiel ein Trägerband, umfassend eine Oberfläche (6), die dazu bestimmt ist, den landwirtschaftlichen Ballen (100) während seiner Vorbereitung aufzunehmen, wobei die Achse (130) der Spirale (140) im Wesentlichen horizontal ausgerichtet ist,
- Einrichtungen zum In-Drehung-Versetzen des auf dem Träger positionierten landwirtschaftlichen Ballens (100) in einer Richtung, die im Wesentlichen parallel zu der Achse (130) der Spirale (140) ist, die Einrichtungen zum In-Drehung-Versetzen umfassend Bewegungseinrichtungen (5) der Oberfläche (6) des Trägers (4) in einer bestimmten, im Wesentlichen horizontalen Richtung (D) und Halteeinrichtungen (16, 18), zum Beispiel mindestens eine Rolle und vorzugsweise zwei Rollen, die um eine im Wesentlichen horizontale und vorzugsweise quer zu der bestimmten Richtung (D) verlaufende Achse (17, 19) drehbar montiert sind, und
- Schwenkeinrichtungen(10) des Trägers (4) in Bezug auf das Gestell (2), um eine im Wesentlichen vertikale Achse,
**dadurch gekennzeichnet, dass** der Vorbereitungstisch (1) auch Bewegungseinrichtungen (12) des Trägers (4) umfasst, die konfiguriert sind, um den Träger (4) und möglicherweise den landwirtschaftlichen Ballen (100), der auf der Oberfläche (6) des Trägers positioniert ist, zwischen dem Eingang und dem Ausgang des Vorbereitungstischs zu bewegen, und dass die Achse (17, 19) der Halteeinrichtungen (16, 18) oberhalb der Achse (130) der Spirale (140) positioniert ist.

2. Vorbereitungstisch (1) nach Anspruch 1, wobei die Halteeinrichtungen (16, 18) an dem Gestell (2), oder dem Träger (4) montiert sind.

3. Vorbereitungstisch (1) nach Anspruch 1 oder 2, wobei die Halteeinrichtungen (16, 18) einziehbar sind und Folgendes umfassen: eine ausgefahrene Konfiguration, in der die Achse (17, 19) der Halteeinrichtungen zwischen der Achse (130) der Spirale und einem oberen Ende des landwirtschaftlichen Ballens (100) positioniert ist, und eine eingezogene Konfiguration, in der die Achse (17, 19) der Halteeinrichtungen über einem oberen Ende des landwirtschaftlichen Ballens (100) positioniert ist, um die Bewegung des landwirtschaftlichen Ballens (100) unterhalb der Halteeinrichtungen (16, 18) zu ermöglichen.

4. Vorbereitungstisch (1) nach einem der vorherigen Ansprüche, wobei die Halteeinrichtungen (16, 18) in der Bewegungsrichtung (D) des landwirtschaftlichen Ballens von dem Eingang zu dem Ausgang des Vorbereitungstischs eine Rolle (18), die vor dem landwirtschaftlichen Ballen (100) positioniert ist, wenn dieser auf dem Träger (4) positioniert ist, und eine Rolle (16), die hinter dem landwirtschaftlichen Ballen (100) positioniert ist, wenn dieser auf dem Träger (4) positioniert ist, umfassen.

5. Vorbereitungstisch (1) nach einem der vorherigen Ansprüche, wobei die Einrichtungen zum Bewegen (12) des Trägers auch konfiguriert sind, um den Träger (4) in einer vertikalen Richtung zu bewegen.

6. Vorbereitungstisch (1) nach einem der vorherigen Ansprüche, auch umfassend eine Aufhängeeinrichtungen (8), die konfiguriert sind, um den Träger (4) an dem Gestell (2) aufzuhängen.

7. Vorbereitungstisch (1) nach dem vorherigen Anspruch, wobei die Aufhängeeinrichtungen (8) durch die Schwenkeinrichtungen (10) und gegebenenfalls die Bewegungseinrichtungen (12) an dem Gestell (2) montiert sind, die sich vorzugsweise oberhalb eines oberen Endes des landwirtschaftlichen Ballens (100) befinden, und wobei die Schwenkeinrichtungen (10) und gegebenenfalls die Bewegungseinrichtungen (12) konfiguriert sind, um den Träger (4) und die Aufhängeeinrichtungen (8) in Bezug auf das Gestell (2) um eine im Wesentlichen vertikale Achse drehen zu lassen und gegebenenfalls entlang der im Wesentlichen vertikalen Achse translatorisch zu bewegen.

8. Vorbereitungstisch (1) nach einem der vorherigen Ansprüche, wobei die Schwenkeinrichtungen (10) konfiguriert sind, um den Träger (4) um mindestens 90° in die eine oder andere Richtung oder sogar um 180° in Bezug auf die vertikale Richtung schwenken zu lassen.

9. Vorbereitungstisch (1) nach einem der vorherigen Ansprüche, wobei die Einrichtungen zum In-Drehung-Versetzen konfiguriert sind, um bei der Vorbereitung des landwirtschaftlichen Ballens (100) den landwirtschaftlichen Ballen (100) in der Abwicklungsrichtung der Spirale (140) drehen zu lassen, vorzugsweise durch Bewegen der Oberfläche (6) des Trägers in der Richtung (D) von dem Eingang zu dem Ausgang des Vorbereitungstischs nach einer möglichen Drehung des landwirtschaftlichen Ballens (100) um 180° durch die Schwenkeinrichtungen (10).

10. Vorbereitungstisch (1) nach dem vorherigen Anspruch, auch umfassend Antriebseinrichtungen, die konfiguriert sind, um bei der Drehung des landwirtschaftlichen Ballens Schnüre zum Verschnüren des landwirtschaftlichen Ballens (100) aufzuwickeln, und/oder Erfassungseinrichtungen, zum Beispiel optische Erfassungseinrichtungen, die konfiguriert sind, um bei der Drehung des landwirtschaftlichen Ballens das Öffnen der Spirale zu erfassen.

## Claims

1. A preparation table (1) for preparing an agricultural bale (100), for example, a straw, flax, or hemp bale, obtained by spirally winding (140) a continuous web (120) of plant stalks previously taken from the ground, the table (1) including:
- an inlet for receiving an agricultural bale (100) to be prepared, and an outlet for supplying the prepared agricultural bale (100),
- a frame (2), preferably static,
- a support (4), for example, a carrier mat, including a surface (6) intended to receive the agricultural bale (100) during its preparation, the axis (130) of the spiral (140) being oriented substantially horizontally,
- means for rotating the agricultural bale (100) positioned on the support, about a direction substantially parallel to the axis (130) of the spiral (140), the means for rotating comprising means (5) for displacing the surface (6) of the support (4) in a determined substantially horizontal direction (D), and retaining means (16, 18), for example, at least one roller and preferably two rollers, mounted in rotation about a substantially horizontal axis (17, 19) and preferably transverse to said determined direction (D), and
- means (10) for pivoting the support (4) relative to the frame (2), about a substantially vertical axis, **characterized in that** the preparation table (1) also comprises means (12) for displacing the support (4) configured to displace the support (4), and optionally the agricultural bale (100) positioned on the surface (6) of the support, between the inlet and the outlet of the preparation table, and **in that** the axis (17, 19) of the retaining means (16, 18) is positioned above the axis (130) of the spiral (140).

2. The preparation table (1) according to claim 1, wherein the retaining means (16, 18) are mounted on the frame (2), or the support (4).

3. The preparation table (1) according to claim 1 or 2, wherein the retaining means (16, 18) are retractable, and include: a deployed configuration wherein the axis (17, 19) of the retaining means is positioned between the axis (130) of the spiral and an upper end of the agricultural bale (100), and a retracted configuration wherein the axis (17, 19) of the retaining means is positioned above an upper end of the agricultural bale (100) to allow the displacement of the agricultural bale (100) below said retaining means (16, 18).

4. The preparation table (1) according to any one of the preceding claims, wherein the retaining means (16, 18) comprise, in the direction of travel (D) of the agricultural bale from the inlet to the outlet of the preparation table, a roller (18) positioned in front of the agricultural bale (100) when the latter is positioned on the support (4), and a roller (16) positioned behind the agricultural bale (100) when the latter is positioned on the support (4).

5. The preparation table (1) according to any one of the preceding claims, wherein the means (12) for displacing the support are also configured to displace the support (4) in a vertical direction.

6. The preparation table (1) according to any one of the preceding claims, also comprising suspension means (8) configured to suspend the support (4) on the frame (2).

7. The preparation table (1) according to the previous claim, wherein the suspension means (8) are mounted on the frame (2) by the pivoting means (10), and optionally the displacement means (12), preferably located above an upper end of the agricultural bale (100), and wherein the pivoting means (10), and optionally the displacement means (12), are configured to rotate around a substantially vertical axis, and optionally translate along said substantially vertical axis, the support (4) and the suspension means (8) relative to the frame (2).

8. The preparation table (1) according to any one of the preceding claims, wherein the pivoting means (10) are configured to pivot the support (4) by at least 90° in one direction or the other, or by 180°, relative to the vertical direction.

9. The preparation table (1) according to any one of the preceding claims, wherein the rotation means are configured to rotate, during preparation of the agricultural bale (100), the agricultural bale (100) in the direction of unwinding of the spiral (140), preferably by displacement of the surface (6) of the support in the direction (D) going from the inlet to the outlet of the preparation table after a possible rotation of the agricultural bale (100) by 180° by the pivoting means (10).

10. The preparation table (1) according to the previous claim, also comprising drive means configured to wrap, during the rotation of the agricultural bale, tying twines of the agricultural bale (100) and/or detection means, for example visual, configured to detect, during the rotation of the agricultural bale, the opening of the spiral.
